(19) Europäisches Patentamt
European Patent Office
Office européen des brevets

(11) **EP 2 213 161 B1**

(12) **EUROPEAN PATENT SPECIFICATION**

(45) Date of publication and mention
of the grant of the patent:
**27.09.2017 Bulletin 2017/39**

(51) Int Cl.:
***A01J 5/007*** *(2006.01)*      ***A01J 5/017*** *(2006.01)*

(21) Application number: **10075039.7**

(22) Date of filing: **26.01.2010**

(54) **Method of automatically milking dairy animals and fully automatic milking machine arranged for carrying out the method**

Verfahren zum automatischen Melken eines Milchtieres und vollautomatische Melkmaschine zu dessen Ausführung

Méthode pour la traite automatique des animaux laitiers et machine de traite entièrement automatique pour réaliser la méthode

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.01.2009 NL 1036478**

(43) Date of publication of application:
**04.08.2010 Bulletin 2010/31**

(73) Proprietor: **Lely Patent N.V.**
**3147 PB Maassluis (NL)**

(72) Inventors:
• **Kool, Leendert**
**2821 NT Stolwijk (NL)**
• **Age, Hempenius**
**9254 GA Hardegarijp (NL)**

(74) Representative: **Octrooibureau Van der Lely N.V.**
**Cornelis van der Lelylaan 1**
**3147 PB Maassluis (NL)**

(56) References cited:
**EP-A- 0 988 784**

**Description**

The invention relates to a method according to the preamble of Claim 1. The invention further relates to a fully automatic milking machine arranged for carrying out this method.

European patent specification EP-A-0 091 892 describes a system in which a cow is milked in the milking parlour when at least a predefined time has elapsed since its last milking. Drawbacks of this system include the fact that no account is taken of mutual differences between the dairy animals to be milked.

It is known from international patent specification WO-A-95/35028 to use as the milking criterion the number of milkings of other dairy animals since the previous milking of the dairy animal in question; the dairy animal is then milked if this number is at least equal to a defined minimum number which can differ from dairy animal to dairy animal. This milking criterion can be realized using simple and inexpensive means.

EP 0 988 784 A1 describes a milking criterion which is based on the number of milkings of other dairy animals, wherein the milking criterion is furthermore dependent on an individual target figure for the number of milkings of the dairy animal in question over each period. In an embodiment the individual target figure is multiplied by an individual correction factor which is dependent on the number of times the dairy animal in question has actually visited the milking parlour in a recent period of time in comparison to the desired number of visits to the milking parlour.

The object of the invention is to further elaborate, to refine and/or to improve a method of this type, or else to offer an alternative.

The invention provides a method of automatically milking dairy animals, such as dairy animals which are able to move freely in an area intended for this purpose and which can individually visit an automatic milking system, wherein a dairy animal is milked during a visit to the milking system if a dairy animal-dependent milking criterion is met, characterized in that

the milking criterion comprises an individual correction factor, which correction factor is dependent on a spread of the duration between successive visits of the dairy animal in question to the milking system.

By incorporating in the milking criterion an individual correction factor which is dependent on a spread of the duration between two successive visits of the dairy animal in question to the milking system, account is taken of the regularity with which dairy animals visit the milking system.

Some dairy animals visit the milking system very regularly, that is to say with low spread of the duration between two successive milkings. For example, in dairy animals of this type, in a defined range of the lactation curve, the duration between two successive milkings is almost always between six and nine hours. Other dairy animals will be milked much less regularly. In dairy animals of this type, the duration between two successive visits can for example vary between five and twelve hours. There is therefore a greater spread of the visits of the dairy animal in question to the milking system.

According to the invention, it is now possible to use in the milking criterion an individual correction factor which is dependent on the spread of the duration between two successive visits to the milking system. The correction factor is said to be an individual factor because for each dairy animal a correction factor is used as a function of the spread of the duration of successive visits to the milking system by the dairy animal in question. The correction factor is preferably defined solely on the basis of the visits of the dairy animal to the milking system during which the dairy animal is actually milked.

In one embodiment the correction factor has a lower value if the dairy animal in question displays a greater spread of the duration between two successive visits of the dairy animal in question to the milking system. In an embodiment of this type the dairy animal in question is given access to the milking system earlier than a dairy animal which must in itself be milked just as often each day, but which displays greater regularity in its visits to the milking system.

In one embodiment the correction factor is defined by the following steps:

- the measuring over a period of the duration between two successive milkings of a dairy animal;
- the defining of a spread of the measured durations; and
- the calculating of an individual correction factor for the dairy animal on the basis of the spread.

The spread of successive milking visits, which is used when defining the individual milking factor, can for example be defined by the calculating of a standard deviation, a magnitude of the spread, or a mean absolute deviation in the durations between successive milkings. In this case, a number of durations between successive milkings can be stored in the memory of a computer or the like. For example, the spread can be defined on the basis of the last ten durations between the last eleven milkings.

After each last milking, the duration between the last milking and the last milking but one can be added to the data stored in the memory as extra data or instead of a previously stored duration. The correction factor can be continuously adapted on the basis of these data.

As an alternative, it is possible to define for each animal one spread of the duration between successive milkings and to use said spread to define the correction factor. It is in this case possible to compare, automatically or non-automatically, the spread to a spread defined using newly measured durations between successive milkings and, if necessary, to adapt the correction factor on the basis thereof.

The individual correction factor according to the invention can be used in various milking criteria, for example a milking criterion which is met if at least a number of milkings (Q) of other dairy animals has taken place since the previous milking of the dairy animal in question, or a milking criterion which is met if at least an amount of time has elapsed since the previous milking of the dairy animal in question. In both milking criteria, it is advantageous to use the spread of the duration of successive milkings as the basis for an individual correction factor for the milking criterion.

The invention further relates to a construction for milking a group of dairy animals, comprising:

- a milking system for milking the dairy animal,
- an identification system for identifying a dairy animal which presents itself for a milking, and
- a control device configured to decide whether an animal which presents itself should be milked,

characterized in that

the control device comprises a milking criterion for deciding which milking criterion an individual correction factor comprises, which correction factor is dependent on a spread of the duration between successive visits of the dairy animal in question to the milking system.

The invention will be explained hereinafter in greater detail based on an embodiment, wherein reference is made to the figures, in which

- Figure 1 is a table containing horizontally, as the first dairy animal parameter P1, the anticipated milk yield over each 24-hour period and vertically, as the second dairy animal parameter P2, the number of days in the lactation period, and
- Figure 2 is a table setting out the durations between two milkings for three different dairy animals.

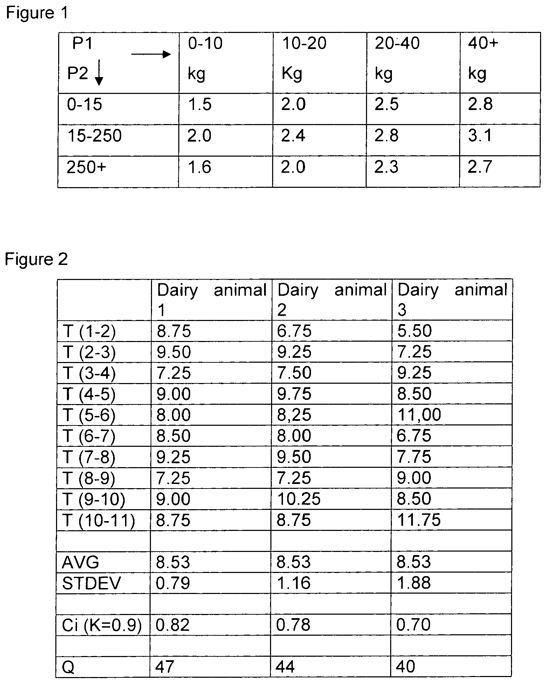

Figure 1 presents a table for dairy animals containing horizontally, as the first dairy animal parameter P1, the anticipated milk yield over each 24-hour period and vertically, as the second dairy animal parameter P2, the number of days in the lactation period. In parameter P1 the dairy animals are divided into four classes based on their anticipated milk yield: from 0 to 10 kg of milk per day, from 10 to 20 kg, from 20 to 40 kg and above 40 kg. In parameter P2 there are three classes: 0 - 15 lactation days, 15 - 250 lactation days and more than 250 lactation days. 12 classes are thus defined for the combination of both parameters P1 and P2.

The user can even set other dairy animal parameters, such as for example the movement activity of the dairy animal (which can be measured inter alia with the aid of a pedometer known per se) and/or the age of the dairy animal and/or the parity of the dairy animal and/or the feed consumption of the dairy animal and/or the health of the udder of the dairy animal (which can be measured inter alia with the aid of means for analysing the milk). This also allows further classes to be defined.

Based on reference tables and/or based on empirical data, each class has assigned to it a milking figure x which specifies how frequently each dairy animal in said class should be milked. Of course, the table can also be refined in such a way that each class contains just one dairy animal. The table comprising the classes and their milking figures is stored in a computer which is connected to the identification system. The computer is arranged to automatically adapt the individual milking figure x when a dairy animal is transferred to another class.

When a dairy animal comes to the milking parlour of the milking robot in order to be milked, the dairy animal is recognized by the dairy animal identification system. The computer calculates the milking criterion, based on which the dairy animal will or will not be milked. It is milked when at least a defined number of milkings Q of other dairy animals (a threshold value) has taken place since its previous milking. This defined number of milkings Q is now defined for each dairy animal as a function of the associated milking figure x, so that a desired number of milkings per unit of time can be achieved for the dairy animal.

The threshold value Q can for example be calculated as follows. The number of milkings M of all the dairy animals per unit of time is divided by the individual milking figure x and multiplied by an individual correction factor $C_i$ according to the invention:

$$Q = C_i * M / x$$

This individual correction factor $C_i$ is dependent on the spread of the duration between two successive milkings of the dairy animal in question.

For example, a group of dairy animals was milked in total 161 times in the last 24 hours. A defined dairy animal has an average daily milk yield of 28 kg over the last seven days and is in lactation for 155 days. The table of Figure 1 reveals for this dairy animal a milking figure of 2.8 milkings over each 24-hour period. 161 milkings divided by 2.8 equals 57 (rounded down). Viewed statistically, this dairy animal would therefore have to be milked again after 57 milkings of other dairy animals. On application of a strict milking criterion of this type without an individual correction factor, the dairy animals would have to frequently report to the milking robot in order to be milked often enough.

However, because the milking behaviour of dairy animals is not always regular, and because the regularity of the milking behaviour is also animal-dependent, the figure 57 is in accordance with the invention also multiplied by an individual correction factor $C_i$ as a function of the spread of the duration between two successive milkings of the dairy animal in question.

The individual correction factor $C_i$ can for example be defined by one of the following formulae.

$$C_i = K \frac{\overline{T}}{\overline{T} + \sigma_2(T)} , \ C_i = K \frac{\overline{T} - \sigma_2(T)}{\overline{T} + \sigma_2(T)} , \ \text{or} \ C_i = K \frac{\overline{T} - \sigma_2(T)}{\overline{T}}$$

wherein K is a constant, $\overline{T}$ is the average of a number of defined durations between successive milkings of the dairy animal in question, and $\sigma_2(T)$ is the standard deviation of the durations between the successive milkings. Each of these formulae yields a correction factor which provides a lower correction factor $C_i$ as the spread increases, wherein the difference between the formulae resides in particular in the steepness and form of the decrease of the correction factor as a function of the spread. One of the aforementioned formulae or an alternative formula can be selected as a function of the desired curve. Other formulae in which a correction factor is calculated as a function of the spread of successive visits to the milking system may also be used.

As an alternative, it is for example also possible to use the magnitude of the spread or the mean absolute deviation in the periods of time between successive milkings to define the spread, in order subsequently to use this to define a correction factor. It is also possible to utilize, instead of the measured average of the duration, the desired duration between two milkings, for example 8 hours if it is desired to milk the dairy animal in question three times per day. The table from Figure 1 may be used to define this desired duration.

Figure 2 is a table containing the durations between two milkings of the last 11 milkings for three different dairy animals, that is to say T (1-2) is the duration between the last milking and the last milking but one, T(2-3) is the duration between the last milking but one and the last milking but two, etc. These durations can each be defined and be added to the table as extra data or instead of previously defined durations.

The periods between successive milkings of the first dairy animal are relatively constant and are in the range between 7.25 and 9.5 hours, whereas the periods for the second dairy animal and the third dairy animal are less constant and are in the range between 6.25 and 10.25 hours and between 5.5 and 11.75 hours respectively.

On the basis of the given durations, an average (AVG) and a standard deviation (STDEV) are defined for each dairy animal. Subsequently, the correction factor is calculated with the aid of the formula $C_i = K \frac{\overline{T} - \sigma_2(T)}{\overline{T}}$ wherein

K is taken to be equal to 0.9. The durations are in this example selected in such a way that the average is the same for the three dairy animals. This makes the effect of the individual correction factor on the basis of the spread more clearly visible. The value of K can be selected in such a way that the values of the correction factor for usual values of the standard deviation are at a defined desired level.

For the first, second and third dairy animals there follows a correction factor of 0.82, 0.78 and 0.70 respectively, leading to a value for Q of 47, 44 and 40 for the first, second and third dairy animals respectively. This allows the target figure x for all the dairy animals to be met to a greater or lesser extent, wherein account is also taken of the spread of the duration for which a defined dairy animal visits the milking system.

In a further embodiment Q is defined as follows. The total number of milkings M of all the dairy animals per unit of time is divided by the individual milking figure x, multiplied by the number of milkings m of the dairy animal in question per unit of time in a recent time interval, divided by the individual milking figure x, and multiplied by the individual correction factor Ci:

$$Q = Ci * M * m / x^2$$

The factor m/x is thus added to the equation as an extra variable. This factor provides a still further correction, for the cases in which a dairy animal was in a recent time interval, for example in the last 12 hours, milked more or less often than would have had to be the case based on the target figure x.

The figure m can for example be defined by measuring the time which has elapsed since the penultimate milking of the dairy animal in question and by deriving from this time the (imaginary) number of milkings of this dairy animal in the last 24 hours. When the penultimate milking of the dairy animal in question took place 11.65 hours ago, this means an imaginary number of milkings of 4.1 in the last 24 hours. This is more than the target figure of 2.8, so that Q is upwardly corrected.

Adding the factor m/x implements correction for the actual number of visits that the dairy animal makes to the milking system with respect to the desired number of visits.

The use of an individual correction factor has been described hereinbefore for a milking criterion, wherein a number of milkings is calculated that must have taken place before the dairy animal in question may be milked again. This individual correction factor can also be used in other milking criteria, for example in a milking criterion which examines the time which has elapsed since the last milking of the dairy animal in question.

**Claims**

1. Method of automatically milking dairy animals, such as dairy animals which are able to move freely in an area intended for this purpose and which can individually visit an automatic milking system, wherein a dairy animal is milked during a visit to the milking system if a dairy animal-dependent milking criterion is met, **characterized in that** the milking criterion comprises an individual correction factor, which correction factor is dependent on a spread of the duration between successive visits of the dairy animal in question to the milking system.

2. Method according to Claim 1, wherein the correction factor has a lower value if the dairy animal in question displays a greater spread of the duration between two successive visits of the dairy animal in question to the milking system.

3. Method according to Claim 1 or 2, wherein the correction factor is defined by the following steps:

   - the measuring over a period of the duration between two successive milkings of a dairy animal;
   - the defining of a spread of the measured durations, and
   - the calculating of an individual correction factor for the dairy animal on the basis of the spread.

4. Method according to one of the preceding claims, wherein a standard deviation, a magnitude of the spread, or a mean absolute deviation in the durations between successive milkings is used to define the spread.

5. Method according to one of the preceding claims, wherein the correction factor is defined by means of the following steps:

   - the measuring over a period of the duration between two successive milkings of a dairy animal;
   - the defining of an average of the measured durations;
   - the defining of a standard deviation of the measured durations; and
   - the calculating of an individual correction factor for the dairy animal in question on the basis of the average and the standard deviation.

6. Method according to one of the preceding claims, wherein the correction factor is applied continuously on the basis of a spread, which is defined during an elapsed period or during a number of last milkings, in the duration between two successive visits of the dairy animal in question to the milking system.

7. Method according to one of the preceding claims, wherein the correction factor is defined solely on the basis of the visits of the dairy animal to the milking system during which the dairy animal is actually milked.

8. Method according to one of the preceding claims, wherein the milking criterion is met if at least a number of milkings (Q) of other dairy animals has taken place since the previous milking of the dairy animal in question.

9. Method according to one of the preceding claims, wherein the milking criterion is met if at least an amount of time has elapsed since the previous milking of the dairy animal in question.

10. Method according to claim 8 or 9, wherein the milking criterion is furthermore based on one or more of the following parameters: the milk yield per unit of time of the dairy animal, the phase of the lactation period that the dairy animal is in, the age of the dairy animal, the parity of the dairy animal, the movement activity of the dairy animal, the feed consumption of the dairy animal, and the health of the udder of the dairy animal.

11. Construction for milking a group of dairy animals, comprising:

- a milking system for milking the dairy animal,
- an identification system for identifying a dairy animal which presents itself for a milking, and
- a control device configured to decide whether an animal which presents itself should be milked,

wherein the control device comprises a milking criterion for said decision, **characterized in that** said milking criterion comprises an individual correction factor, which correction factor is dependent on a spread of the duration between successive visits of the dairy animal in question to the milking system.

**Patentansprüche**

1. Verfahren zum automatischen Melken von Milchtieren wie etwa von Milchtieren, die sich frei in einem für diesen Zweck gedachten Bereich bewegen können und die einzeln ein automatisches Melksystem besuchen können, wobei ein Milchtier während eines Besuchs bei dem Melksystem gemelkt wird, wenn ein von dem Milchtier abhängiges Melkkriterium erfüllt ist, **dadurch gekennzeichnet, dass**
das Melkkriterium einen individuellen Korrekturfaktor umfasst, wobei der Korrekturfaktor von einer Streubreite der Zeitspanne zwischen aufeinanderfolgenden Besuchen des betreffenden Milchtiers zu dem Melksystem abhängt.

2. Verfahren nach Anspruch 1, wobei der Korrekturfaktor einen kleineren Wert aufweist, wenn das betreffende Milchtier eine größere Streubreite der Zeitspanne zwischen zwei aufeinanderfolgenden Besuchen des betreffenden Milchtiers zu dem Melksystem zeigt.

3. Verfahren nach Anspruch 1 oder 2, wobei der Korrekturfaktor durch die folgenden Schritte definiert ist:

- Messen über eine Periode der Zeitspanne zwischen zwei aufeinanderfolgenden Melkvorgängen eines Milchtiers;
- Definieren einer Streubreite der gemessenen Zeitspannen und
- Berechnen eines individuellen Korrekturfaktors für das Milchtier anhand der Streubreite.

4. Verfahren nach einem der vorhergehenden Ansprüche, wobei eine Standardabweichung, eine Größe der Streubreite oder eine mittlere absolute Abweichung der Zeitspannen zwischen aufeinanderfolgenden Melkvorgängen verwendet wird, um die Streubreite zu definieren.

5. Verfahren nach einem der vorhergehenden Ansprüche, wobei der Korrekturfaktor mit Hilfe der folgenden Schritte definiert ist:

- Messen über eine Periode der Zeitspanne zwischen zwei aufeinanderfolgenden Melkvorgängen eines Milchtiers;
- Definieren eines Mittelwerts der gemessenen Zeitspannen;
- Definieren einer Standardabweichung der gemessenen Zeitspannen; und
- Berechnen eines individuellen Korrekturfaktors für das betreffende Milchtier anhand des Mittelwerts und der Standardabweichung.

6. Verfahren nach einem der vorhergehenden Ansprüche, wobei der Korrekturfaktor kontinuierlich anhand einer Streubreite angewendet wird, der während einer abgelaufenen Periode oder während einer Anzahl von letzten Melkvorgängen in der Zeitspanne zwischen zwei aufeinanderfolgenden Besuchen des betreffenden Milchtiers zu dem Melksystem definiert ist.

7. Verfahren nach einem der vorhergehenden Ansprüche, wobei der Korrekturfaktor nur anhand der Besuche des Milchtiers bei dem Melksystem, während denen das Milchtier tatsächlich gemolken wird, definiert ist.

8. Verfahren nach einem der vorhergehenden Ansprüche, wobei das Melkkriterium erfüllt ist, wenn mindestens eine Anzahl von Melkvorgängen (Q) von anderen Milchtieren seit dem vorherigen Melken des betreffenden Milchtiers stattgefunden hat.

9. Verfahren nach einem der vorhergehenden Ansprüche, wobei das Melkkriterium erfüllt ist, wenn seit dem vorherigen Melken des betreffenden Milchtiers zumindest eine Zeitdauer verstrichen ist.

10. Verfahren nach Anspruch 8 oder 9, wobei das Melkkriterium darüber hinaus auf einem oder mehreren der folgenden Parameter beruht: dem Milchertrag pro Zeiteinheit des Milchtiers, der Phase der Laktationsperiode, in der sich das Milchtier befindet, dem Alter des Milchtiers, der Parität des Milchtiers, der Bewegungsaktivität des Milchtiers, des Futterverbrauchs des Milchtiers und der Gesundheit des Euters des Milchtiers.

11. Konstruktion einer Melkgruppe von Milchtieren, die Folgendes umfasst:

- ein Melksystem zum Melken des Milchtiers,
- ein Identifikationssystem zum Identifizieren eines Milchtiers, das sich selbst zum Melken präsentiert, und
- eine Steuervorrichtung, die konfiguriert ist, zu entscheiden, ob ein Tier, das sich selbst präsentiert, gemolken werden sollte, wobei

die Steuervorrichtung ein Melkkriterium für die Entscheidung umfasst, **dadurch gekennzeichnet, dass** das Melkkriterium einen individuellen Korrekturfaktor umfasst, wobei der Korrekturfaktor von einer Streubreite der Zeitspanne zwischen aufeinanderfolgenden Besuchen des betreffenden Milchtiers zu dem Melksystem abhängt.

## Revendications

1. Procédé de traite automatique d'animaux laitiers, tels que des animaux laitiers qui peuvent se déplacer librement dans une zone prévue à cet effet et qui peuvent visiter individuellement un système de traite automatique, dans lequel un animal laitier est trait pendant une visite au système de traite si un critère de traite dépendant de l'animal laitier est respecté, **caractérisé en ce que** le critère de traite comprend un facteur de correction individuel, lequel facteur de correction dépend d'un étalement de la durée entre visites successives de l'animal laitier en question au système de traite.

2. Procédé selon la revendication 1, dans lequel le facteur de correction a une valeur inférieure si l'animal laitier en question présente un étalement plus important de la durée entre deux visites successives de l'animal laitier en question au système de traite.

3. Procédé selon la revendication 1 ou 2, dans lequel le facteur de correction est défini par les étapes suivantes :

- la mesure sur une période de la durée entre deux traites successives d'un animal laitier ;
- la définition d'un étalement des durées mesurées ; et
- le calcul d'un facteur de correction individuel pour l'animal laitier sur la base de l'étalement.

4. Procédé selon une des revendications précédentes, dans lequel un écart type, une amplitude de l'étalement ou un écart moyen absolu dans les durées entre traites successives est utilisé pour définir l'étalement.

5. Procédé selon une des revendications précédentes, dans lequel le facteur de correction est défini au moyen des étapes suivantes :

- la mesure sur une période de la durée entre deux traites successives d'un animal laitier ;
- la définition d'une moyenne des durées mesurées ;
- la définition d'un écart type des durées mesurées ; et
- le calcul d'un facteur de correction individuel pour l'animal laitier en question sur la base de la moyenne et de l'écart type.

6. Procédé selon une des revendications précédentes, dans lequel le facteur de correction est appliqué de façon continue sur la base d'un étalement, qui est défini pendant une période écoulée ou pendant un nombre de dernières traites, dans la durée entre deux visites successives de l'animal laitier en question au système de traite.

**7.** Procédé selon une des revendications précédentes, dans lequel le facteur de correction est défini uniquement sur la base des visites de l'animal laitier au système de traite pendant lesquelles l'animal laitier est réellement trait.

**8.** Procédé selon une des revendications précédentes, dans lequel le critère de traite est respecté si au moins un nombre de traites (Q) d'autres animaux laitiers a eu lieu depuis la traite précédente de l'animal laitier en question.

**9.** Procédé selon une des revendications précédentes, dans lequel le critère de traite est respecté si au moins une quantité de temps s'est écoulée depuis la traite précédente de l'animal laitier en question.

**10.** Procédé selon la revendication 8 ou 9, dans lequel le critère de traite est en outre basé sur un ou plusieurs des paramètres suivants : le rendement laitier par unité de temps de l'animal laitier, la phase de la période de lactation dans laquelle se trouve l'animal laitier, l'âge de l'animal laitier, la parité de l'animal laitier, l'activité de déplacement de l'animal laitier, la consommation alimentaire de l'animal laitier, et la santé de la mamelle de l'animal laitier.

**11.** Construction pour la traite d'un groupe d'animaux laitiers, comprenant :

- un système de traite pour traire l'animal laitier,
- un système d'identification pour identifier un animal laitier qui se présente de lui-même pour une traite, et
- un dispositif de contrôle configuré pour décider si un animal qui se présente de lui-même devrait être trait,

le dispositif de contrôle comprenant un critère de traite pour ladite décision,
**caractérisé en ce que** ledit critère de traite comprend un facteur de correction individuel ;
lequel facteur de correction dépend d'un étalement de la durée entre visites successives de l'animal laitier en question au système de traite.

Figure 1

| P1 → <br> P2 ↓ | 0-10 <br> kg | 10-20 <br> Kg | 20-40 <br> kg | 40+ <br> kg |
|---|---|---|---|---|
| 0-15 | 1.5 | 2.0 | 2.5 | 2.8 |
| 15-250 | 2.0 | 2.4 | 2.8 | 3.1 |
| 250+ | 1.6 | 2.0 | 2.3 | 2.7 |

Figure 2

| | Dairy animal 1 | Dairy animal 2 | Dairy animal 3 |
|---|---|---|---|
| T (1-2) | 8.75 | 6.75 | 5.50 |
| T (2-3) | 9.50 | 9.25 | 7.25 |
| T (3-4) | 7.25 | 7.50 | 9.25 |
| T (4-5) | 9.00 | 9.75 | 8.50 |
| T (5-6) | 8.00 | 8,25 | 11,00 |
| T (6-7) | 8.50 | 8.00 | 6.75 |
| T (7-8) | 9.25 | 9.50 | 7.75 |
| T (8-9) | 7.25 | 7.25 | 9.00 |
| T (9-10) | 9.00 | 10.25 | 8.50 |
| T (10-11) | 8.75 | 8.75 | 11.75 |
| | | | |
| AVG | 8.53 | 8.53 | 8.53 |
| STDEV | 0.79 | 1.16 | 1.88 |
| | | | |
| Ci (K=0.9) | 0.82 | 0.78 | 0.70 |
| | | | |
| Q | 47 | 44 | 40 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0091892 A
- WO 9535028 A
- EP 0988784 A1